# EUROPÄISCHE PATENTSCHRIFT

(11) **EP 1 533 500 B1**
(45) Veröffentlichungstag und Bekanntmachung des Hinweises auf die Patenterteilung: **30.01.2008**
(21) Anmeldenummer: 03104278.1
(22) Anmeldetag: 19.11.2003
(51) Int. Cl.: F02D 41/02, F02D 41/40

(54) **Verfahren und Vorrichtung zur Regeneration einer Abgasnachbehandlungseinrichtung**
Method and apparatus for regeneration of an exhaust gas after-treatment device
Procédé et dispositif pour régénération d'un équipement de post traitement des gaz d'échappement

(43) Veröffentlichungstag der Anmeldung: 25.05.2005
(60) Teilanmeldung: 05104883.3
(73) Patentinhaber: Ford Global Technologies, LLC, A subsidary of Ford Motor Company, Dearborn, MI 48126 (US)
(72) Erfinder: Yacoub, Yasser Mohammed Sayed, 50858, Köln (DE); Moraal, Paul Eduard, 6291 VP, Vaals (NL); Kuenstler, Johannes, 52064, Aachen (DE)
(74) Vertreter: Drömer, Hans-Carsten

(56) Entgegenhaltungen:
- EP-A- 0 826 869
- EP-A- 1 148 227
- EP-A- 1 211 404
- EP-A- 1 281 852
- EP-A- 1 296 050
- DE-A- 10 033 159
- US-A- 5 479 775
- US-A1- 2002 194 837
- US-A1- 2003 145 581

## Beschreibung

Die Erfindung betrifft ein Verfahren zur Regeneration einer Abgasnachbehandlungseinrichtung nach dem Oberbegriff von Anspruch 1 und eine entsprechende Vorrichtung nach dem Oberbegriff von Anspruch 2.

Zur Verringerung von schädlichen Emissionen von Brennkraftmaschinen werden in der Regel Abgasnachbehandlungseinrichtungen eingesetzt. Bei Dieselmotoren ist es vor allem aufgrund gesetzlicher Bestimmungen erforderlich, den Ausstoß von Rußpartikeln auf vorgegebene Grenzwerte zu begrenzen. Hierzu sind Diesel-Partikelfilter (DPF) oder kurz Teilchenfilter vorgesehen, welche den Ruß sammeln, der von einem Dieselmotor ausgestoßen wird.

Allerdings wird in einem Teilchenfilter mit der Zeit Kohlenstoff aufgebaut, der den Filter zusetzt und dadurch den Filterdurchfluß verringert. Dies erhöht wiederum den Gegendruck auf den Dieselmotor, wodurch der Kraftstoffverbrauch steigt. Daher muß der Filter von Zeit zu Zeit regeneriert werden, um die Kosten des Kraftstoffverbrauchs zu minimieren, die mit dem erhöhten Gegendruck zusammenhängen.

Bei einer Regeneration wird die aus Teilchen bestehende Masse im Teilchenfilter oxidiert. Angehäufter Kohlenstoff zündet bei relativ hohen Temperaturen von etwa 550°C, falls keine katalytische Unterstützung vorliegt. Derartige Temperaturen werden im Teilchenfilter nur bei hoher Last und Motordrehzahl erreicht. Um die Abgastemperatur auf ausreichend hohe Pegel bei allen Motorbetriebsbedingungen zu erhöhen, müssen daher für einen sicheren Teilchenfilterbetrieb spezielle Mittel vorgesehen sein.

Es existieren verschiedene Ansätze, um diese hohen Abgastemperaturen zu erzielen. Beispielsweise kann die Motorlast durch das Einschalten elektrischer Verbraucher wie beispielsweise von Glühkerzen des Dieselmotors oder der Heckscheibenheizung erhöht werden.

Als besonders effizientes Verfahren zur Erhöhung der Abgastemperatur hat sich eine Nacheinspritzung von Kraftstoff noch während des Arbeitstaktes erwiesen, wie sie beispielsweise aus der EP 1296050 A1 bekannt ist. Die Nacheinspritzung, also die Einspritzung von zusätzlichem Kraftstoff in alle oder einige Zylinder nach der entsprechenden Haupteinspritzung, aber immer noch während des Arbeitstaktes, ist eine effiziente Methode zum Erhöhen der Abgastemperatur. Abhängig von der Quantität und dem Einspritzbeginn der Nacheinspritzung kann ein Teil davon im Zylinder verbrennen und sowohl das Motordrehmoment als auch die Abgastemperatur erhöhen, wohingegen ein anderer Teil den Motor in Form unverbrannter Kohlenwasserstoffe (HC) verlassen kann. Vorausgesetzt, daß ein Oxidationskatalysator vor dem Partikelfilter heiß genug ist, oxidieren diese unverbrannten Kohlenwasserstoffe über den Katalysator in einer exothermen Reaktion und erzeugen demzufolge einen zusätzlichen Abgas-Temperaturanstieg. Wenn jedoch der Oxidationskatalysator unterhalb der Light-Off Temperatur ist, ergibt eine hohe HC-Konzentration einen unangenehmen Geruch im Abgas.

Die Quantität und insbesondere der Zeitpunkt der Nacheinspritzung müssen sehr sorgfältig kalibriert sein, um sicherzustellen, daß die folgenden Grenzbedingungen eingehalten werden:
- Die maximalen Temperaturgrenzen für den Motor und das Abgassystem dürfen nicht überschritten werden.
- Eine maximal zulässige exotherme Reaktion über den Katalysator darf nicht überschritten werden.
- Die Abgas-Emissionen von unterbranntem HC müssen unterhalb einer bestimmten Grenze liegen.
- Das durch die Nacheinspritzung erzeugte zusätzliche Drehmoment muß innerhalb vorgegebener Grenzen liegen.
- Der minimale Grenzwert an Sauerstoff, der für eine effiziente Verbrennung von Ruß erforderlich ist, muß eingehalten werden.

Die Empfindlichkeit der Verbrennung der Nacheinspritzung gegenüber dem Einspritzzeitpunkt ist insbesondere bei niedrigen Motorlasten kritisch. Hier ist die Energie ziemlich niedrig, die durch die Verbrennung der Haupteinspritzung freigesetzt wird. Wenn die Nacheinspritzung zu spät stattfindet, werden lediglich unverbrannte Kohlenwasserstoffe erzeugt. Wenn dagegen die Nacheinspritzung zu früh stattfindet, wird sie vollständig verbrannt und erhöht das Drehmoment des Motors, ohne die Abgastemperatur wesentlich zu erhöhen. Diese Drehmomenterhöhung kann zwar durch Verringern der Quantität der Haupteinspritzung kompensiert werden, allerdings besteht eine untere Grenze für Einspritzmengen, unter der das Kraftstoffeinspritzsystem nicht ausreichend genau arbeitet. Diese untere Grenze liegt nahe bei der Kraftstoffmenge der Haupteinspritzung bei niedriger Motorlast, die bei einem typischen PKW-Dieselmotor etwa 4 bis 6 mg/Arbeitstakt beträgt.

Daher kann es also bei sehr geringen Motorlasten möglich sein, daß keine ausreichend hohen Abgastemperaturen erzielt werden können, aufgrund der Tatsache, daß die erforderliche Menge von nacheingespritztem Kraftstoff zum Erzielen ausreichend hoher Temperaturen nicht eingespritzt werden kann, ohne entweder die Grenzbedingungen für die HC-Konzentration im Abgas oder die Grenzbedingungen für die Drehmomenterhöhung wie oben erwähnt zu verletzen.

Die oben erwähnten Grenzbedingungen müssen zu jeder Zeit eingehalten werden. Daher ist es in den aus dem Stand der Technik bekannten Steuerungssystemen für die Abgastemperatur Standard, die Einspritzkennfelder für die Nacheinspritzung mit einer erheblichen Sicherheitsspanne zu versehen, so daß die Abgastemperaturen typischerweise etwa 50 bis etwa 100°C unterhalb der kritischen Grenzen bleiben. Dies ist aufgrund einer erwarteten Variabilität von verschiedenen Komponenten des Einspritzsystems, des Motors und des Abgassystems erforderlich. Allerdings kann mit einer solch großen Sicherheitsspanne ein Steuerungssystem nicht optimal betrieben werden.

Ein weiteres Problem tritt während eines transienten Fahrbetriebs bei geringen Fahrzeuggeschwindigkeiten mit häufigen Schub- und Leerlaufphasen auf (Fahrzyklen, wie sie bei einer Stadtfahrt auftreten). Während eines Schubvorgangs ist die Haupteinspritzungsmenge null, was die anwendbare Nacheinspritzungsmenge stark begrenzt. Dies führt in Kombination mit den Schwierigkeiten beim Erreichen einer ausreichend hohen Temperatur während einer Leerlaufphase dazu, daß bei Fahrzyklen mit geringer Geschwindigkeit und/oder Schubphasen die durchschnittliche Abgastemperatur am DPF Einlaß etwa 50 bis etwa 100°C niedriger ist als die Temperatur, die im stationären Fahrbetrieb bei konstanter Geschwindigkeit erreicht werden kann.

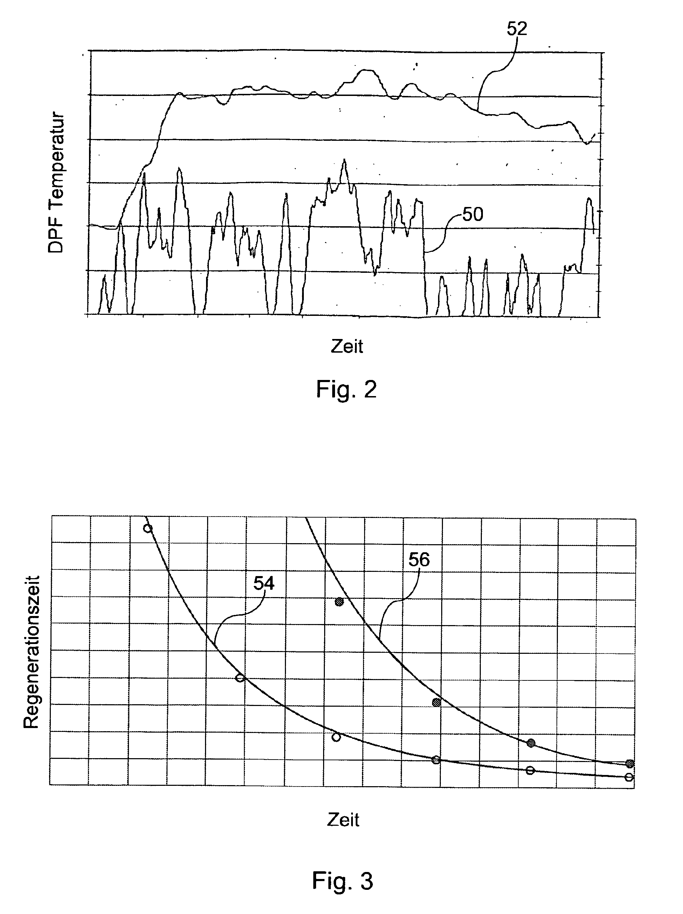

In Fig. 2 ist in einem Diagramm der typische Temperaturverlauf am Einlaß des DPF während einer Stadtfahrt 50 (transienter Fahrbetrieb) und während einer Fahrt mit nahezu konstanter Geschwindigkeit 52 (stationärer Fahrbetrieb) dargestellt. Bei etwa konstanter Geschwindigkeit liegt ein stationärer Zustand vor und es kann eine wesentlich höhere, typischerweise um etwa 50-100°C höhere Temperatur im Gegensatz zur Stadtfahrt erzielt werden, bei der häufige Temperatureinbrüche aufgrund des transienten Fahrbetriebs durch Schub und Leerlauf auftreten.

Bisher wurden die oben erwähnten Einschränkungen nicht als Problem betrachtet, da die Temperaturpegel, die zur Regeneration eines DPF Systems mit Kraftstoffadditiv erforderlich sind, ausreichend weit unter den kritischen thermischen Grenzbedingungen liegen. Allerdings sollte ihre Bedeutung nicht unterschätzt werden, insbesondere wenn man die Regenerationseigenschaften eines katalytisch beschichteten Teilchenfilters oder eines Teilchenfiltersystems ohne Kraftstoffadditiv betrachtet, die wesentlich höhere Temperaturen zur Regeneration benötigen.

In Fig. 3 ist in einem Diagramm der Temperaturverlauf über die Regenerationszeit für ein System mit Kraftstoffadditiv 54 und einem katalytisch beschichteten System 56 dargestellt. Für beide Systeme ist erkennbar, daß ein Abfall in der Abgastemperatur zu einer Verlängerung der erforderlichen Regenerationszeit führt, infolge der exponentialen Abhängigkeit der Regenerationsrate von der Temperatur.

Insbesondere wird vermutet, daß ein Unterschied von ca. 50°C in der Abgastemperatur für die Fähigkeit ausschlaggebend ist, DPF Systeme mit oder ohne Kraftstoffadditiv anzuwenden. Insbesondere für Anwendungen auf dem US-Markt, wo Kraftstoffadditive unerwünscht und überhaupt nicht erlaubt sind, ist die Steuerung der optimalen Abgastemperatur daher besonders wichtig.

Zusammenfassend ermöglicht es die derzeit verfügbare Technologie, Diesel-Teilchenfilter mit Kraftstoffadditiven in einem großen Bereich von Betriebsbedingungen zu regenerieren. Allerdings ist es noch nicht möglich, infolge von Problemen bei der Abgastemperatursteuerung bei sehr geringen Motorlasten, höhere Abgastemperaturen für einen robusten Betrieb von katalytisch beschichteten DPFs (oder DPFs ohne Kraftstoffadditiv) durchgehend zu erreichen.

Die EP 1 281 852 betrifft ein Verfahren zur Regeneration eines Teilchenfilters wobei nach einer Haupteinspritzung zwei Nacheinspritzungen durchgeführt werden. Die erste Nacheinspritzung bewirkt in Kombination mit der Haupteinspritzung eine stabile, späte Verbrennung um eine höhere Temperatur des Abgases zu erreichen. Die zweite Nacheinspritzung wird nach dem Verbrennungsprozeß durchgeführt, so dass den Abgasen unverbrannte Hydrocarbonate zugeführt werden, welche einen Katalysator aktivieren und seine Effektivität verbessern. Sie erhöht außerdem die Abgastemperatur am Katalysatorauslass und somit am Teilchenfiltereinlass, was vorteilhaft für die Regeneration des Filters bei geringen Motorlasten ist.

Aufgabe der vorliegenden Erfindung ist es daher, eine Vorrichtung und ein Verfahren zur Regeneration einer Abgasnachbehandlungseinrichtung vorzuschlagen, welche auch bei geringen Motorlasten unter transienten Betriebsbedingungen höhere Abgastemperaturen bewirken können.

Diese Aufgabe wird durch ein Verfahren zur Regeneration einer Abgasnachbehandlungseinrichtung mit den Merkmalen nach Anspruch 1 und eine entsprechende Vorrichtung mit den Merkmalen nach Anspruch 2 gelöst.

Ein wesentlicher Gedanke der Erfindung besteht darin, die Temperatur und/oder Kohlenwasserstoffkonzentration der Abgase durch mindestens zwei Nacheinspritzungen von Kraftstoff im Arbeitstakt der Brennkraftmaschine zu erhöhen. Dadurch eignet sich die Erfindung besonders für ein dieselangetriebenes Kraftfahrzeug, das mit einer Abgasnachbehandlungseinrichtung ausgestattet ist, die periodisch das Erreichen eines erhöhten thermischen Pegels für eine DPF Regeneration und/oder Entschwefelung eines NOₓ-Speicherkatalysators erfordert.

Ein Motormanagementsystem eines Kraftfahrzeugs soll die Fähigkeit für mehrere Kraftstoffeinspritzungen besitzen, nämlich Einspritzungen während des Expansionsarbeitstaktes und nach der Haupteinspritzung (Nacheinspritzung). Erfindungsgemäß werden nun im Arbeits- oder Expansionsarbeitstakt mehrere (wenigstens zwei) getrennte Nacheinspritzungen nach der Haupteinspritzung vorgenommen.

Durch die Erfindung können hohe Abgastemperaturen insbesondere auch im transienten Fahrbetrieb, d.h. bei häufigem Schub und Leerlauf des Kraftfahrzeugs aufrechterhalten werden. Die Einführung von mehreren Nacheinspritzungen (zwei oder mehr) führt zu folgenden Merkmalen:
- eine Vorkonditionierung des Zustandes eines Gases im Zylinder durch Tei verbrennung der aktuellen Einspritzung in Vorbereitung für die folgende Einspritzung;
- eine Stimulation der Vervollständigung der Verbrennung im Zylinder der vorhergehenden Einspritzung durch Verbesserung der Gemischbildung resultierend aus höheren Turbulenzen, der durch die hohe kinetische Energie der aktuellen Einspritzung verursacht wird;
- Aufteilen der gesamten Einspritzmenge auf unterschiedliche Einspritzzeitpunkte;
- eine Entkopplungsfunktionalität von Drehmoment und Kohlenwasserstoffproduktion. In diesem Sinne wird der Zeitpunkt einer Einspritzung für die späten Nacheinspritzungen (d. h. ein Einspritzzeitpunkt von wenigstens 50 bis 60° Kurbelwinkel nach der vorhergehenden Einspritzung) spät genug plaziert, um sicherzustellen, daß innerhalb eines bestimmten Kalibrierbereiches der Einspritzmenge Drehmomentneutralität aufrechterhalten wird; der untere Bereich einer Einspritzmengenänderung ist durch das Drehmomentneutralitätskriterium und die obere Grenze ist durch die Konzentration von HC im Abgas bestimmt.

Die Erfindung ermöglicht:
- eine verbesserte Fähigkeit, hohe Temperaturen im Abgas zu erzielen; das Aufteilen der erforderlichen Nacheinspritzungsmenge auf mehrere Einspritzungen ermöglicht eine Kalibrierung von Menge und Zeitpunkt jeder Einspritzung, während die Grenzbedingungen für ein neutrales Motordrehmoment (dieselbe Drehmomentübersetzung für eine vorgegebene Fahreranforderung), Verbrennungsstabilität und eine HC-Begrenzung beachtet werden; dasselbe Ergebnis ist mit einer einzelnen Nacheinspritzung sehr viel schwieriger zu erreichen (zeitintensiv), wenn nicht gar unmöglich, da es nahezu unmöglich ist, eine stabile Verbrennung im Zylinder einer einzelnen großen Nacheinspritzungsmenge zu erreichen;
- eine robuste Verbrennung der Mehrfacheinspritzung im Zylinder für große Abweichungen im Luftpfad und in der Motortemperatur beispielsweise beim Kaltstart, für Umweltabweichungen wie eine Umgebungstemperatur von unter 0°C und einem geringen Umgebungsdruck bei großen Höhen;
- eine Begrenzung der Kraftstoffölverdünnung durch Aufteilen einer einzelnen großen Menge einer Nacheinspritzung auf zwei oder mehr Nacheinspritzungen; und
- ein verbessertes Abgastemperaturniveau bei einem realen transienten Fahrbetrieb als Ergebnis der späten Verbrennung im Expansionsarbeitstakt ohne bemerkbare Drehmomentstörungen.

Die Erfindung betrifft nun ein Verfahren zur Regeneration einer Abgasnachbehandlungseinrichtung im Abgassystem einer Brennkraftmaschine, insbesondere eines Teilchenfilters im Abgassystem eines Dieselmotors. Erfindungsgemäß wird bzw. werden die Temperatur und/oder Kohlenwasserstoffkonzentration der Abgase durch mindestens zwei Nacheinspritzungen von Kraftstoff im Arbeitstakt der Brennkraftmaschine erhöht.

Der Zeitpunkt und die Kraftstoffmenge jeder der mindestens zwei Nacheinspritzungen werden insbesondere abhängig von Betriebsbedingungen der Brennkraftmaschine wie Motortemperatur, Motordrehzahl, Drehmoment, Kühlwassertemperatur und/oder Zylinderkopftemperatur eingestellt.

Ferner werden der Zeitpunkt und die Kraftstoffmenge jeder der mindestens zwei Nacheinspritzungen abhängig von transienten Betriebsbedingungen der Brennkraftmaschine korrigiert.

Der Zeitpunkt und die Kraftstoffmenge jeder der mindestens zwei Nacheinspritzungen werden erfindungsgemäß auch abhängig von einer Abweichung im Luftpfad der Brennkraftmaschine korrigiert.

Darüb hinaus können der Zeitpunkt und die Kraftstoffmenge jeder der mindestens zwei Nacheinspritzungen abhängig von Umgebungsbedingungen der Brennkraftmaschine wie Umgebungstemperatur und/oder Umgebungsluftdruck eingestellt werden.

Möglich ist, den Zeitpunkt und die Kraftstoffmenge jeder der mindestens zwei Nacheinspritzungen abhängig von einer Temperaturdifferenz zwischen einer Soll- und einer Meßtemperatur der Abgase der Brennkraftmaschine zu regeln.

Es kann eine Korrektur von Einspritzbeginn und Kraftstoffmenge jeder der mindestens zwei Nacheinspritzungen abhängig von der Temperaturdifferenz zwischen der Soll- und der Meßtemperatur der Abgase der Brennkraftmaschine derart begrenzt werden, daß keine kritischen Abgastemperaturen überschritten werden.

Die Erfindung betrifft ferner eine Vorrichtung zur Regeneration einer Abgasnachbehandlungseinrichtung im Abgassystem einer Brennkraftmaschine, insbesondere eines Teilchenfilters im Abgassystem eines Dieselmotors. Die Vorrichtung zeichnet sich durch eine Steuerungs- und Regelstruktur aus, die derart ausgebildet ist, daß die Temperatur und/oder Kohlenwasserstoffkonzentration der Abgase durch mindestens zwei Nacheinspritzungen von Kraftstoff im Arbeitstakt der Brennkraftmaschine erhöht wird bzw. werden.

In einfacher Form umfaßt die Steuerungs- und Regelstruktur ein Nacheinspritzkennfeld, das ausgebildet ist, um abhängig von Betriebsbedingungen der Brennkraftmaschine wie Motortemperatur, Motordrehzahl, Drehmoment, Kühlwassertemperatur und/oder Zylinderkopftemperatur den Zeitpunkt und die Kraftstoffmenge jeder der mindestens zwei Nacheinspritzungen im stationären Betrieb einzustellen. Jedoch können die Nacheinspritzsignale der stationär kalibrierten Kennfelder auch im transienten Betrieb genutzt werden.

In erfindungsgemäßer Ausführungsform umfaßt die Steuerungs- und Regelstruktur ein Transientenkorrekturkennfeld, das ausgebildet ist, um abhängig von transienten Betriebsbedingungen der Brennkraftmaschine den Zeitpunkt und die Kraftstoffmenge jeder der mindestens zwei Nacheinspritzungen im transienten Betrieb zu korrigieren. Unter transientem Betrieb wird im Allgemeinen der Übergang von einem zum nächsten Motorbetriebspunkt (Motordrehzahl/Motordrehmoment) verstanden, aber auch beispielsweise ein Betrieb mit sich häufig und schnell ändernder Motordrehzahl und einem sich änderndem Motordrehmoment, wie er beispielsweise bei einem transienten Fahrbetrieb eines Kraftfahrzeugs im Stadtverkehr auftritt.

Weiterhin umfasst die Steuerungs- und Regelstruktur zudem erfindungsgemäß ein Luftpfadkorrekturkennfeld, das ausgebildet ist, um abhängig von einer Abweichung im Luftpfad der Brennkraftmaschine den Zeitpunkt und die Kraftstoffmenge jeder der mindestens zwei Nacheinspritzungen zu korrigieren.

Weiterhin kann die Steuerungs- Regelstruktur ein Korrekturkennfeld umfassen, das ausgebildet ist, um abhängig von Umgebungsbedingungen der Brennkraftmaschine Wie Umgebungstemperatur und/oder Umgebungsluftdruck den Zeitpunkt und die Kraftstoffmenge jeder der mindestens zwei Nacheinspritzungen im stationären Betrieb einzustellen.

In einer Weiterbildung der Erfindung kann die Steuerungs- und Regelstruktur eine Reglereinheit umfassen, die ausgebildet ist, um abhängig von einer Temperaturdifferenz zwischen einer Soll- und einer Meßtemperatur der Abgase der Brennkraftmaschine den Zeitpunkt und die Kraftstoffmenge jeder der mindestens zwei Nacheinspritzungen zu regeln.

Insbesondere kann die Steuerungs- und Regelstruktur einen Regelungsbegrenzer umfassen, der ausgebildet ist, um die Korrektur von Zeitpunkt und Kraftstoffmenge jeder der mindestens zwei Nacheinspritzungen abhängig von der Temperaturdifferenz zwischen der Soll- und der Meßtemperatur der Abgase der Brennkraftmaschine derart zu begrenzen, daß keine kritischen Abgastemperaturen überschritten werden.

Weitere Vorteile und Anwendungsmöglichkeiten der vorliegenden Erfindung ergeben sich aus der nachfolgenden Beschreibung in Verbindung mit den in den Zeichnungen dargestellten Ausführungsbeispielen.

In der Beschreibung, in den Ansprüchen, in der Zusammenfassung und in den Zeichnungen werden die in der hinten angeführten Liste der Bezugszeichen verwendeten Begriffe und zugeordneten Bezugszeichen verwendet.

Die Zeichnungen zeigen in:
- Fig. 1: ein Blockschaltbild eines Ausführungsbeispiels einer erfindungsgemäßen Steuerungs- und Regelstruktur eines Motormanagementsystems;
- Fig. 2: ein Diagramm mit dem typischen Temperaturverlauf am Einlaß eines DPF während einer Stadtfahrt (transienter Fahrbetrieb) und während einer Fahrt mit nahezu konstanter Geschwindigkeit (stationärer Fahrbetrieb); und
- Fig. 3: ein Diagramm mit dem Temperaturverlauf über die Regenerationszeit für ein System mit Kraftstoffadditiv und einem katalytisch beschichteten System.

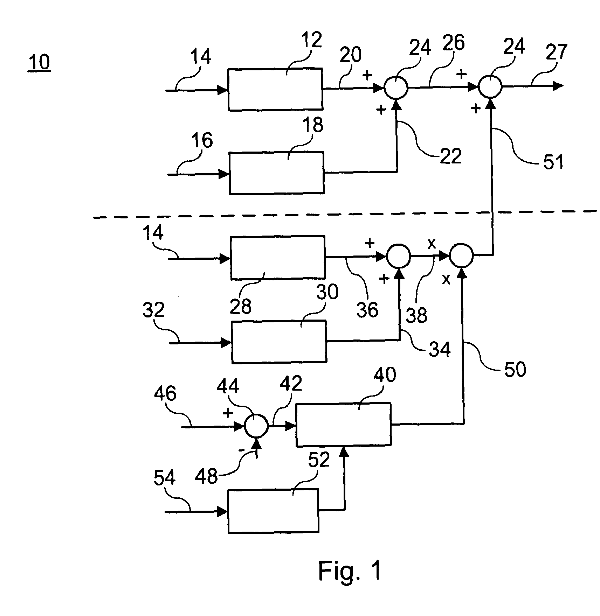

Im Folgenden können gleiche und/oder funktional gleiche Elemente mit den gleichen Bezugszeichen versehen sein. Eine Implementierung der erfindungsgemäßen Mehrfach-Nacheinspritzungsstrategie in Form einer Steuerungs- und Regelstruktur 10 für einen Dieselmotor ist in Fig. 1 dargestellt. Die Steuerungs- und Regelstruktur 10 kann beispielsweise in Form einer Software oder einer elektronischen Schaltung als Teil eines Motormanagementsystems implementiert werden. Das dargestellte Blockdiagramm der Steuerungs- und Regelstruktur 10 wird entsprechend der Anzahl von benutzten Nacheinspritzungen wiederholt; ferner ist es auf den Zeitpunkt, d.h. den Einspritzbeginn und die Einspritzdauer, als auch die Menge der Nacheinspritzungen anwendbar. Die dargestellte Steuerungsstruktur 10 umfaßt drei Hauptelemente:

Ein Nacheinspritzkennfeld 12 wird abhängig von den Motorbetriebssignalen 14 (Motordrehzahl/Motordrehmoment) verwendet. Das Nacheinspritzsignal wird auf die geforderte Regenerationstemperatur im Stationärbetrieb kalibriert. Die Stationärbetriebskalibrierung für den Zeitpunkt oder die Menge der Nacheinspritzung wird aufgrund von Umgebungsbedingungen wie Motortemperatur (Kühlwassertemperatur, Zylinderkopftemperatur) und Umgebungstemperatur und -luftdruck über ein Korrekturkennfeld 18 korrigiert. Hierzu empfängt das Korrekturkennfeld 18 ein Umgebungssignal 16. Das Nacheinspritzkennfeld 12 erzeugt ein Nacheinspritzsignal 20 und das Korrekturkennfeld 18 ein Korrektursignal 22. Beide Signale 20 und 22 werden durch einen Addierer 24 zu einem Nacheinspritzsteuersignal 26 summiert, das den Zeitpunkt und die Menge der Nacheinspritzungen bestimmt. In dieser Implementierung wird das Nacheinspritzsteuersignal 26 gesteuert (durch die Elemente 12, 18 und 24 über der gestrichelten Linie). Die oben erläuterte Struktur ist für jede beliebige Anzahl von getrennten Nacheinspritzungen anwendbar.

Erfindungsgemäß umfaßt die oben erläuterte einfache Nacheinspritzungsstrategie weitere zusätzliche Korrekturelemente für einen transienten Fahrbetrieb. Durch diese Korrekturelemente wird ein Korrektursignal 51 erzeugt, das wiederum aus einem Transienten- und Luftpfadkorrektursignal 38 und einem Reglersignal 50 gebildet wird. Das Korrektursignal 51 wird mit dem Nacheinspritzsteuersignal 26 mittels eines Addierers 24 zu einem korrigierten Nacheinspritzsteuersignal 27 addiert. Die Erzeugung des Korrektursignals 51 wird nun im Folgenden erläutert.

Ein Transientenkorrekturkennfeld 28 ist während transienten Fahrbetriebsbedingungen aktiv und wie in Fig. 1 dargestellt eine Funktion des Motorbetriebszustands, der in Form von Motorbetriebssignalen 14 zur Verfügung gestellt wird. Während transienten Fahrbetriebsbedingungen hat sich gezeigt, daß die Temperaturziele des stationären Fahrbetriebs oft nicht erreicht werden. Statt dessen verbleibt die Abgastemperatur auf einem niedrigeren Pegel, häufig 50 bis 100°C niedriger als erforderlich. Um ausreichend hohe Temperaturen für eine Regeneration unter diesen Bedingungen aufrecht zu erhalten, ist es möglich, einige der eingangs erwähnten Grenzbedingungen für eine relativ kurze Zeitdauer zu lockern, die für den stationären Fahrbetrieb beachtet werden müssen (wie die Turbineneinlaßtemperatur, den minimalen Sauerstoffpegel, etc.). Dies wird erreicht durch Erzeugen einer zweiten Stationärbetriebskalibrierung mit einer modifizierten Zieltemperatur (die auf einen höheren Pegel gesetzt wird) und modifizierten Grenzbedingungen (wie beispielsweise niedrigeren Sauerstoffpegeln), was dann in einem so genannten Aufheizmodus benutzt wird, der durch das Transientenkorrekturkennfeld 28 implementiert wird.

Ein Luftpfadkorrekturkennfeld 30 verarbeitet Abweichungen 32 in den Parametern des Luftpfads und erzeugt ein Luftpfadkorrektursignal 34 für den Ansaugkrümmerdruck, Massenluftstrom und/oder die Ansaugkrümmertemperatur. Die Einspritzkennfelder für den stationären Fahrbetrieb sind in der Regel für einen bestimmten Solldruck optimiert. Während eines transienten Fahrbetriebs treten Abweichungen vom erforderlichen Solldruck auf, so daß der ursprüngliche Nacheinspritzparameter nicht weiter optimal ist. Statt dessen muß ein(e) unterschiedliche(r) Nacheinspritzzeitpunkt und/oder -menge benutzt werden, um die optimale Abgastemperatur aufrecht zu erhalten.

Schließlich ist eine Reglerstruktur vorgesehen, welche die Nacheinspritzung (insbesondere im oben erwähnten Aufheizmodus) korrigiert, so daß zulässige Temperaturgrenzen nicht für längere Zeitperioden überschritten werden. Diese Reglerstruktur umfaßt zwei Elemente:

Eine Temperaturkorrekturregeleinheit 40 stellt einen Regelungsterm dar, der die Transientenkorrektur mittels eines Reglersignals 50 in Antwort auf ein Temperaturdifferenzsignal 42 zwischen einer Soll-Temperatur in Form eines entsprechenden Temperatur-Sollsignals 46 und einer Meß-Temperatur in Form eines Temperatur-Meßsignals 48 reguliert. Das Temperaturdifferenzsignal 42 wird mittels eines Subtrahierers 44 aus dem Temperatur-Sollsignal 46 und dem Temperatur-Meßsignal 48 ermittelt. Es sind keine zusätzlichen Heizungs- oder Transientenkorrekturen notwendig, falls die Zieltemperatur bereits erreicht ist, und das Reglersignal 50 würde den Wert null annehmen.

Ein Regelungsbegrenzer 52 ist vorgesehen, um sicherzustellen, daß die kritischen thermischen Grenzen der verschiedenen Komponenten nicht überschritten werden. Daher wird ein zulässiger maximaler Wert für den Regelungskorrekturfaktor als eine

Funktion von der gemessenen Abgastemperatur in Form eines Abgastemperatur-Meßsignals 54 über die kritischen Grenzen (Turbineneinlaßtemperatur, Katalysatortemperatur, exothermische Reaktion im Katalysator, etc.) berechnet. Die maximale Grenze des Reglersignals 50 wird auf null gesetzt, wenn die gemessenen Temperaturen ihre stationären Fahrbetriebsgrenzen erreichen (maximale Katalysatorauslaßtemperatur typischerweise um 650°C und eine maximale Turbineneinlaßtemperatur typischerweise um 750 bis 800°C).

Mit der oben erläuterten Steuerungs- und Regelstruktur 10 kann sichergestellt werden, daß die Abgastemperatursteuerung auf einem optimalen Wert insbesondere während eines transienten Fahrbetriebs betrieben wird, während zur selben Zeit die kritischen thermischen Grenzbedingungen immer überwacht werden, um die Integrität des gesamten Abgassystems zu erhalten.

Eine typische Implementierung der obigen Struktur für den Fall der Regenerierung eines Diesel-Partikelfilters (DPF) unter Benutzung eines Einspritzsystems, das zwei oder mehr Nacheinspritzungen ausführen kann, folgt unter der Annahme, daß die kritischen Temperaturgrenzen eine Temperatur von ca. 800°C am Turbineneinlaß und von ca. 760°C innerhalb des Katalysators sind:
- Das Nacheinspritzkennfeld 12 zielt auf eine Abgastemperatur von 650°C stromaufwärts zum DPF ab, während Grenzbedingungen von wenigstens 5 % Sauerstoff, 750°C vor Turbine und 700°C innerhalb des Katalysators eingehalten werden. Die erste und zweite Nacheinspritzungsmenge und der Zeitpunkt, d. h. Einspritzbeginn und -dauer, werden mit diesem Ziel und den Grenzbedingungswerten kalibriert.
- Das Transientenkorrekturkennfeld 28 zielt auf eine Temperatur von 780°C Turbine, 3 % Sauerstoff und 750°C Temperatur innerhalb des Katalysators ab, und wird nur für die zweite Nacheinspritzungsmenge und deren Zeitpunkt angewandt.
- Das Luftpfadkorrekturkennfeld 30 wird auf 100 bis 200 mbar Abweichung vom Sollwert des Ansaugkrümmerdrucks kalibriert. Entweder wird die Haupteinspritzung oder die erste Nacheinspritzung modifiziert, um ein Referenzdrehmoment einzuhalten. Die zweite Nacheinspritzungsmenge wird für ein Ziel von 750°C vor Turbine kalibriert.

Zwei wichtige Aspekte in der oben erwähnten Implementierung erfordern besondere Aufmerksamkeit:
- Zwei Level einer Stationärbetriebskalibrierung werden eingestellt: einer für 5 % Sauerstoffgehalt und eher eingeschränkte Temperaturgrenzen. Der andere für einen Sauerstoffgehalt von 3 %, der als eine Aufheizmodus-Kalibrierung dient, und deaktiviert wird, wenn einmal die Zieltemperatur erreicht ist. In diesem Sinne kann die zweite Nacheinspritzungsmenge bei einem höheren Wert kalibriert werden, in Kenntnis, daß im transienten Fahrbetrieb die erreichbaren Abgastemperaturen typischerweise niedriger sind als die während eines stationären Fahrbetriebs. Das Ergebnis besagt dann, daß im transienten Fahrbetrieb eine höhere Abgastemperatur erzielt werden kann, während im stationären Fahrbetrieb die Regelung sicherstellt, daß die zulässigen Temperaturgrenzen nicht überschritten werden. Die Turbineneinlaßtemperatur, die üblicherweise nicht gemessen wird, kann ungefähr aus der Turbinenauslaß- oder Katalysatoreinlaßtemperatur bestimmt werden, die typischerweise gemessen werden.
- Das Erfordernis für eine Benutzung von mehreren Nacheinspritzungen ist die Implementierung einer Strategie wie oben vorgeschlagen. Es sollte möglich sein, eine dynamische Korrektur der Menge von einer Nacheinspritzung zu erhalten, ohne sich auf das Motordrehmoment auszuwirken. Schließlich soll das Fahrverhalten nicht extra angepaßt werden müssen, während eine Filterregeneration läuft. Daher Könnte abweichend von der beanspruchten Erfindung die erste Nacheinspritzung, die üblicherweise nahe an der Haupteinspritzung liegt, und einen bestimmten Drehmomentpegel erzeugt, nicht durch die Regelung oder Transientenkorrektur modifiziert werden. Andererseits kann die zweite (und jede weitere) Einspritzung spät genug erfolgen, um nicht irgendein Drehmoment zu erzeugen, und demzufolge können sie dynamisch korrigiert werden. Eine einzelne Nacheinspritzung könnte zwar theoretisch spät genug erfolgen, um kein Drehmoment zu erzeugen. Dies gilt je-doch nur, wenn eine große exotherme Reaktion über das Katalysatorsystem erlaubt ist, was normalerweise nicht der Fall ist.

### Bezugszeichen

- 10: Steuerungs- und Regelstruktur
- 12: Nacheinspritzkennfeld
- 14: Motorbetriebssignale
- 16: Umgebungssignale
- 18: Korrekturkennfeld
- 20: Nacheinspritzsignal
- 22: Korrektursignal
- 24: Addierer
- 26: Nacheinspritzsteuersignal
- 27: korrigiertes Nacheinspritzsteuersignal
- 28: Transientenkorrekturkennfeld
- 30: Luftpfadkorrekturkennfeld
- 32: Luftpfadabweichungssignal
- 34: Luftpfadkorrektursignal
- 36: Transientenkorrektursignal
- 38: Transienten- und Luftpfadkorrektursignal
- 40: Temperaturkorrekturregeleinheit
- 42: Temperaturdifferenzsignal
- 44: Subtrahierer
- 46: Temperatur-Sollsignal
- 48: Temperatur-Meßsignal
- 50: Reglersignal
- 51: Korrektursignal
- 52: Regelungsbegrenzer
- 54: Abgastemperatur-Meßsignal

## Patentansprüche

1. Verfahren zur Regeneration einer Abgasnachbehandlungseinrichtung im Abgassystem einer Brennkraftmaschine, insbesondere eines Teilchenfilters im Abgassystem eines Dieselmotors, wobei die Temperatur und/oder Kohlenwasserstoffkonzentration der Abgase durch mindestens zwei Nacheinspritzungen von Kraftstoff im Arbeitstakt der Brennkraftmaschine erhöht wird bzw. werden, wobei der Zeitpunkt und die Kraftstoffmenge jeder der mindestens zwei Nacheinspritzungen abhängig von Betriebsbedingungen der Brennkraftmaschine wie Motortemperatur, Motordrehzahl, Drehmoment, Kühlwassertemperatur und/oder Zylinderkopftemperatur eingestellt werden (12),
**dadurch gekennzeichnet, daß**
der Zeitpunkt und die Kraftstoffmenge jeder der mindestens zwei Nacheinspritzungen abhängig von transienten Betriebsbedingungen der (14, 28, 29) Brennkraftmaschine korrigiert werden, wobei der Zeitpunkt und die Kraftstoffmenge jeder der mindestens zwei Nacheinspritzungen abhängig von einer Abweichung im Luftpfad der Brennkraftmaschine korrigiert werden (32, 30, 24).

2. Vorrichtung zur Regeneration einer Abgasnachbehandlungseinrichtung im Abgassystem einer Brennkraftmaschine, insbesondere eines Teilchenfilters im Abgassystem eines Dieselmotors, die eine Steuerungs- und Regelstruktur (10) aufweist, die derart ausgebildet ist, daß die Temperatur und/oder Kohlenwasserstoffkonzentration der Abgase **durch** mindestens zwei Nacheinspritzungen von Kraftstoff im Arbeitstakt der Brennkraftmaschine erhöht wird bzw. werden, wobei die Steuerungs- und Regelstruktur (10) ein Nacheinspritzkennfeld (12) umfaßt, das ausgebildet ist, um abhängig von Betriebsbedingungen der Brennkraftmaschine wie Motortemperatur, Motordrehzahl, Drehmoment, Kühlwassertemperatur und/oder Zylinderkopftemperatur den Zeitpunkt und die Kraftstoffmenge jeder der mindestens zwei Nacheinspritzungen im stationären Betrieb einzustellen,
**dadurch gekennzeichnet, daß**
die Steuerungs- und Regelstruktur (10) ein Transientenkorrekturkennfeld (28) umfaßt, das ausgebildet ist, um abhängig von transienten Betriebsbedingungen der Brennkraftmaschine den Zeitpunkt und die Kraftstoffmenge jeder der mindestens zwei Nacheinspritzungen im transienten Betrieb zu korrigieren, wobei die Steuerungs- und Regelstruktur (10) ein Luftpfadkorrekturkennfeld (30) umfaßt, das ausgebildet ist, um abhängig von einer Abweichung im Luftpfad der Brennkraftmaschine den Zeitpunkt und die Kraftstoffmenge jeder der mindestens zwei Nacheinspritzungen zu korrigieren.

## Claims

1. Method for regenerating an exhaust gas aftertreatment device in the exhaust system of an internal combustion engine, in particular a particle filter in the exhaust system of a diesel engine, with the temperature and/or hydrocarbon concentration of the exhaust gases being increased by means of at least two post-injections of fuel in the working stroke of the internal combustion engine, with the time and the fuel quantity of each of the at least two post-injections being set (12) as a function of operating conditions of the internal combustion engine such as engine temperature, engine speed, torque, cooling water temperature and/or cylinder head temperature,
**characterized in that**
the time and the fuel quantity of each of the at least two post-injections are corrected (14, 28, 24) as a function of transient operating conditions of the internal combustion engine, with the time and the fuel quantity of each of the at least two post-injections being corrected (32, 30, 24) as a function of a deviation in the air path of the internal combustion engine.

2. Device for regenerating an exhaust gas aftertreatment device in the exhaust system of an internal combustion engine, in particular a particle filter in the exhaust system of a diesel engine, which device has a control and regulating structure (10) which is designed such that the temperature and/or hydrocarbon concentration of the exhaust gases are or is increased by means of at least two post-injections of fuel in the working stroke of the internal combustion engine, with the control and regulating structure (10) comprising a post-injection characteristic map (12) which is designed so as to set the time and the fuel quantity of each of the at least two post-injections in steady-state operation as a function of operating conditions of the internal combustion engine such as engine temperature, engine speed, torque, cooling water temperature and/or cylinder head temperature,
**characterized in that**
the control and regulating structure (10) comprises a transient correction characteristic map (28) which is designed so as to correct the time and the fuel quantity of each of the at least two post-injections in transient operation as a function of transient operating conditions of the internal combustion engine, with the control and regulating structure (10) comprising an air path correction characteristic map (30) which is designed so as to correct the time and the fuel quantity of each of the at least two post-injections as a function of a deviation in the air path of the internal combustion engine.

## Revendications

1. Procédé pour la régénération d'un dispositif de post-traitement des gaz d'échappement dans le système de gaz d'échappement d'un moteur à combustion interne, notamment d'un filtre à particules dans le système de gaz d'échappement d'un moteur diesel, la température et/ou la concentration en hydrocarbures des gaz d'échappement étant augmentées par au moins deux post-injections de carburant pendant la phase de travail du moteur à combustion interne, l'instant et la quantité de carburant de chacune des au moins deux post-injections étant ajustés (12) en fonction des conditions de fonctionnement du moteur à combustion interne, comme la température du moteur, le régime du moteur, le couple, la température de l'eau de refroidissement et/ou la température de la culasse,
**caractérisé en ce que**
l'instant et la quantité de carburant de chacune des au moins deux post-injections sont corrigés (14, 28, 24) en fonction de conditions de fonctionnement transitoires du moteur à combustion interne, l'instant et la quantité de carburant de chacune des au moins deux post-injections étant corrigés (32, 30, 24) en fonction d'un écart dans la voie d'air du moteur à combustion interne.

2. Dispositif pour la régénération d'un dispositif de post-traitement des gaz d'échappement dans le système de gaz d'échappement d'un moteur à combustion interne, notamment d'un filtre à particules dans le système de gaz d'échappement d'un moteur diesel, qui présente une structure de commande et de régulation (10) réalisée de telle sorte que la température et/ou la concentration en hydrocarbures des gaz d'échappement soient augmentées par au moins deux post-injections de carburant pendant la phase de travail du moteur à combustion interne, la structure de commande et de régulation (10) comprenant un champ caractéristique de post-injection (12) qui est réalisé de manière à ajuster l'instant et la quantité de carburant de chacune des au moins deux post-injections en mode stationnaire en fonction de conditions de fonctionnement du moteur à combustion interne, comme la température du moteur, le régime du moteur, le couple, la température de l'eau de refroidissement et/ou la température de la culasse,
**caractérisé en ce que**
la structure de commande et de régulation (10) comprend un champ caractéristique de correction de phénomènes transitoires (28) qui est réalisé de manière à corriger l'instant et la quantité de carburant de chacune des au moins deux post-injections en mode transitoire en fonction de conditions de fonctionnement transitoires du moteur à combustion interne, la structure de commande et de régulation (10) comprenant un champ caractéristique de correction de voie d'air (30) qui est réalisé pour corriger l'instant et la quantité de carburant de chacune des au moins deux post-injections en fonction d'un écart dans la voie d'air du moteur à combustion interne.
